# DEMANDE DE BREVET EUROPEEN

(11) **EP 1 369 309 A1**
(43) Date de publication de la demande: **10.12.2003**
(21) Numéro de dépôt: 03291328.7
(22) Date de dépôt: 03.06.2003
(51) Int. Cl.: B60R 19/18

(54) **Poutre de pare-chocs et véhicule automobile correspondant**

(30) Priorité: 06.06.2002 FR 0206978
(71) Demandeur: Faurecia Industries, 92000 Nanterre (FR)
(72) Inventeur: Berne, Sébastien, 25200 Montbeliard (FR); Ricchiuti, Michel, 25490 Dampierre les Bois (FR); Gauthier, Eric, 92120 Montrouge (FR)
(74) Mandataire: Domenego, Bertrand

(57) **Abrégé**

Cette poutre comprend une région arrière (6) et une région avant (7) qui comprennent des nervures (40, 42) en matière plastique délimitant entre elles des alvéoles. La région arrière (6) possède une densité de nervures (40, 42) plus importante que la région avant (7) pour présenter une raideur aux chocs plus importante que la région avant.

## Description

La présente invention concerne une poutre de pare-chocs pour véhicule automobile.

Le comportement d'un véhicule automobile devrait satisfaire à certaines contraintes lors de chocs standards, dont le choc dit « piéton » et le choc dit « faible vitesse » ou « parking ».

Le choc dit « piéton » est un choc à 40 km/h contre des éléments simulant un piéton et en particulier ses jambes. Le but est de vérifier que lors d'un tel choc les risques de blessures graves d'un piéton, et notamment de ses genoux, sont limités.

Le choc dit « parking » est un choc à environ 4 km/h contre un obstacle rigide, simulant par exemple un poteau.

Lors d'un tel choc, le véhicule automobile et en particulier sa poutre de pare-chocs ne devrait subir que des déformations élastiques pour qu'aucune réparation ne soit nécessaire.

Les exigences de ces deux chocs sont donc contradictoires dans la mesure où le choc dit « piéton » requiert une poutre de pare-chocs dont le comportement aux chocs soit mou, tandis que le choc dit « parking » requiert une poutre dont le comportement aux chocs soit rigide.

L'invention a donc pour but de résoudre ce problème en fournissant une poutre de pare-chocs qui permette de satisfaire aux contraintes des chocs dits « piéton » et « parking ».

A cet effet, l'invention a pour objet une poutre de pare-chocs pour véhicule automobile, caractérisée en ce qu'elle comprend une région arrière de raideur aux chocs plus importante et une région avant de raideur aux chocs plus faible.

Selon des modes particuliers de réalisation, la poutre peut comprendre l'une ou plusieurs des caractéristiques suivantes, prise(s) isolément ou selon toutes les combinaisons techniquement possibles :
- au moins la région avant comprend des nervures en matière plastique délimitant entre elles des alvéoles,
- la région avant comprend une bande d'extrémité avant qui s'étend latéralement sensiblement sur toute la largeur de la poutre en bordant des alvéoles,
- la région arrière comprend un corps métallique, et la matière plastique de la région avant est surmoulée sur le corps métallique,
- la matière plastique surmoulée forme dans la région arrière des nervures de renfort du corps,
- la région arrière comprend des nervures en matière plastique délimitant des alvéoles,
- la région avant comprend des nervures en matière plastique délimitant entre elles des alvéoles, et la région arrière possède une densité de nervures plus importante que la région avant,
- la région arrière comprend des nervures arrière bordant par l'arrière des alvéoles, et les bords avant des nervures arrière sont de concavités dirigées vers l'avant,
- la poutre a une hauteur plus importante dans une région centrale que dans des régions d'extrémités latérales.

L'invention a en outre pour objet un véhicule automobile comprenant une poutre de pare-chocs, caractérisé en ce que la poutre est une poutre telle que définie précédemment.

L'invention sera mieux comprise à la lecture de la description qui va suivre, donnée uniquement à titre d'exemple, et faite en se référant aux dessins annexés, sur lesquels :
- la figure 1 est une vue schématique, partielle, en perspective et éclatée de l'extrémité avant d'un véhicule automobile selon un premier mode de réalisation de l'invention,
- la figure 1A est une vue analogue à la figure 1 illustrant le corps métallique de la poutre de pare-chocs.
- la figure 2 est une vue schématique, partielle et agrandie de l'extrémité latérale droite d'une variante de la poutre du véhicule de la figure 1,
- la figure 3 est une vue analogue à la figure 2 illustrant une autre variante,
- la figure 4 est une vue schématique en perspective illustrant une poutre de pare-chocs selon un deuxième mode de réalisation de l'invention,
- la figure 5 est une demi-vue de dessus de la poutre de la figure 4, et
- la figure 6 est une demi-vue de face de la poutre de la figure 4.

Dans tout ce qui suit, les orientations utilisées sont les orientations habituelles d'un véhicule automobile.

Ainsi, les termes « avant », « arrière », « droite » et « gauche » s'entendent par rapport à la position d'un conducteur et au sens de marche du véhicule.

En outre, pour faciliter la compréhension des figures, des repères orthonormés Oxyz ont été représentés en reprenant la terminologie généralement utilisée dans le domaine automobile. Ainsi, l'axe Ox correspond à la direction horizontale et longitudinale du véhicule. L'axe Oy correspond à la direction horizontale et transversale au véhicule. L'axe Oz correspond à la direction verticale.

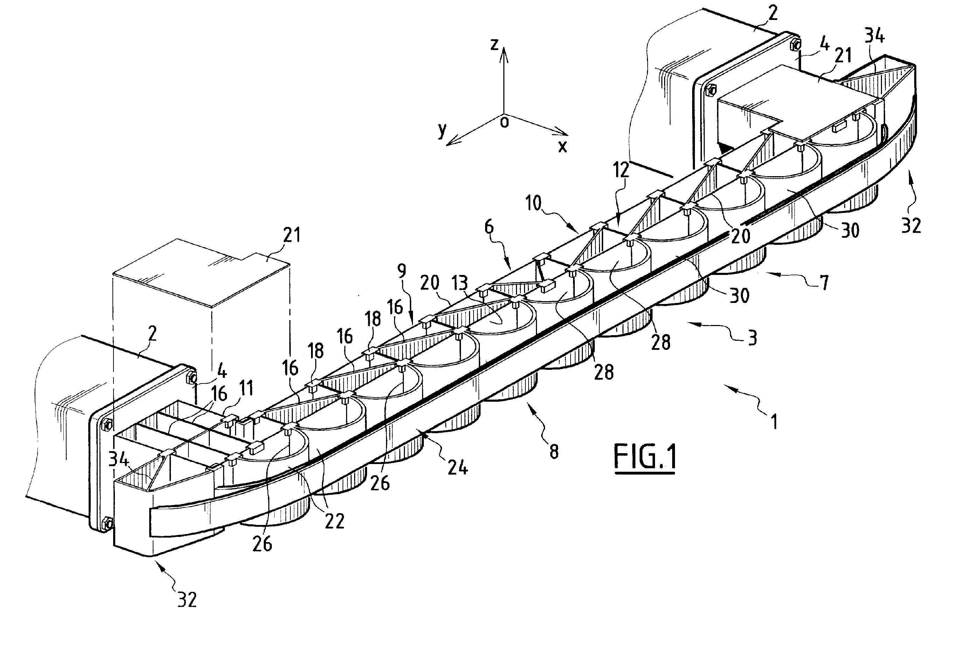

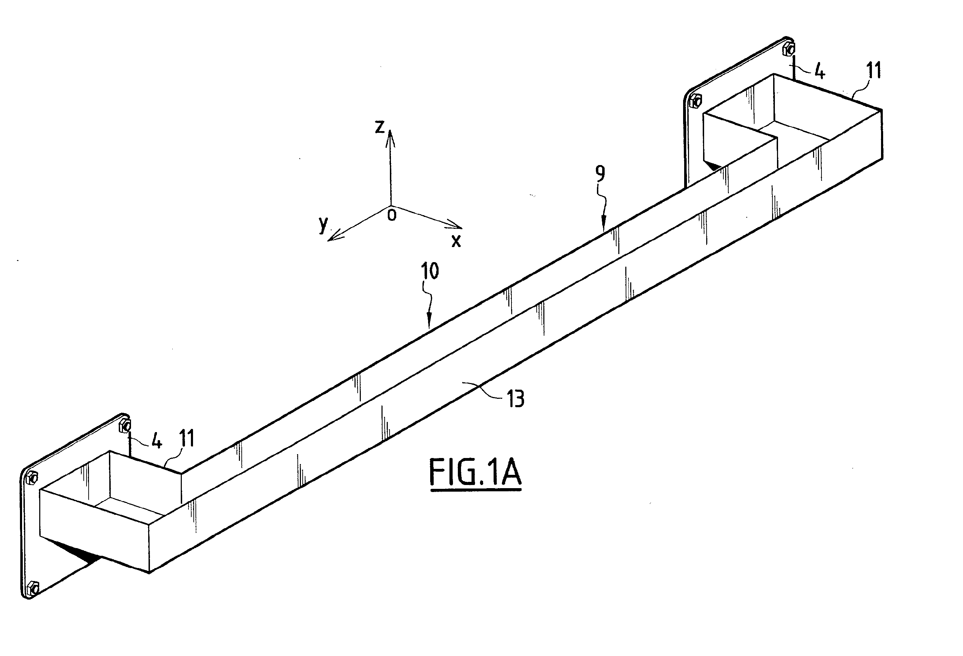

La figure 1 illustre schématiquement l'extrémité longitudinale avant 1 d'un véhicule automobile.

On y distingue les longerons 2 du châssis du véhicule et une poutre de pare-chocs 3 fixée aux extrémités avant des longerons 2 grâce à des platines 4.

De manière classique, la poutre de pare-chocs 3 sera recouverte d'une peau d'habillage non-représentée.

La poutre de pare-chocs 3 comprend une région arrière 6 et une région avant 7.

La poutre 3 est réalisée par surmoulage d'une matière plastique 8 sur un corps métallique 9.

Le corps métallique 9 est réalisé par exemple en acier ou en aluminium. Comme on le voit sur la figure 1A, il a en vue de dessus une forme en C et comprend ainsi une traverse 10 qui s'étend latéralement d'un longeron 2 à l'autre sur toute la largeur du véhicule automobile, et deux branches latérales 11 qui prolongent les extrémités latérales de la traverse 10 vers l'arrière et se terminent par les platines de fixation 4.

Le corps 9 est un profilé qui présente en section, aussi bien au niveau de la traverse 10 que des branches 11, une forme de U ouvert vers le haut. Le profilé 9 délimite donc intérieurement une cavité 12 débouchant vers le haut et permettant ainsi le surmoulage de la matière plastique 8 comme décrit ultérieurement.

La matière plastique 8 comprend, en arrière de la paroi avant 13 de la traverse 10, des nervures 16 qui s'étendent dans la cavité 12 avec une configuration en dents de scie dans la traverse 10 et une configuration quadrillée dans les branches 11.

Ces nervures 16 de renfort du corps 9 sont accrochées fermement à ce dernier grâce à des blocs de fixation 18 venus de matière avec les nervures 16 et qui enveloppent les bords supérieurs 20 du corps 9. Pour améliorer la fixation, ces bords supérieurs 20 peuvent comprendre des encoches recouvertes par les blocs 18, comme décrit dans la demande FR-2 803 899 au nom d'ECIA INDUSTRIE.

Dans d'autres variantes, l'accrochage de la matière plastique 8 surmoulée sur le corps 9 peut également être amélioré grâce à des techniques telles que celles décrites dans le document EP-370 342 au nom de BAYER.

Des plaques métalliques 21 supérieures viennent fermer le corps 9 au niveau des branches 11 et des extrémités latérales de la traverse 10.

Ces plaques 21 ont par exemple été soudées sur le corps 9 après surmoulage de la matière plastique 8 dans la cavité 12 par le haut.

Sur la figure 1, une plaque 21 a été représentée éloignée de la poutre 3 pour faciliter la compréhension.

Le corps métallique 9 et les nervures 16 forment la région arrière 6 de la poutre 3, laquelle région 6 est située en arrière de la paroi avant 13 de la traverse 10.

La région avant 7, disposée en avant de cette paroi avant 13, comprend essentiellement des nervures 22 de la matière plastique 8 en forme de demi-cylindres verticaux disposés latéralement les uns à côté des autres sensiblement sur toute la largeur de la traverse 10, et une bande 24 de matière plastique qui s'étend en avant des demi-cylindre 22 sur toute la largeur de la poutre de pare-chocs 3. La bande 24 a une hauteur nettement inférieure à celle des demi-cylindres 22 et est disposée à un niveau sensiblement médian de ceux-ci. Les demi-cylindres 22 adjacents ont des génératrices verticales 26 communes par lesquelles ils sont reliés à la paroi avant 13 de la traverse 10.

Les nervures 22 délimitent avec la paroi avant 13 des alvéoles 28 en forme de demi-cylindres et avec la bande 24 des alvéoles 30 qui sont bordées à l'avant par la bande 24.

La bande 24 de la matière plastique 8 se dédouble au niveau de ses extrémités latérales où elle est venue de matière avec des plots latéraux 32 formés également par la matière plastique 8. Ces plots 32 prolongent la traverse 10 et les branches 11 latéralement vers l'extérieur et ils ont sensiblement des formes de trapèzes à l'intérieur desquels une nervure respective 34 oblique est prévue.

Ces plots 32 sont surmoulés sur les branches 11.

Lors d'un choc avec un piéton, seul la région avant 7 de la poutre 3 va se déformer. Cette région 7 comprenant des nervures 22 et 24 de la matière plastique 8 délimitant des alvéoles 28 et 30, elle présente une raideur aux chocs relativement faible.

En outre, la bande 24 permet de répartir sur plusieurs nervures 22 les efforts lors d'un tel choc.

Ainsi, on constate que les risques de blessures graves d'un piéton sont faibles. Les contraintes du choc dit « piéton » sont donc satisfaites.

En cas de choc à faible vitesse contre un obstacle rigide, la région arrière 6 de la poutre 3, et en particulier la traverse 10, vont être sollicitées. La raideur aux chocs de la région arrière 6 est plus importante que celle de la région avant 7, notamment grâce à la fonction de renfort que les nervures 16 assurent dans le corps 9.

Ainsi, la poutre 3 permet de satisfaire aux exigences du choc dit « parking ». En outre, on a constaté que la poutre de pare-chocs 3 permet de satisfaire aux exigences de deux autres chocs standards, à savoir le choc dit « réparabilité » ou « Danner », et le choc dit « grande vitesse ».

Dans le choc dit « réparabilité », le véhicule percute à environ 16km/h un obstacle rigide, s'étendant sur environ 40% de la largeur de la poutre de pare-chocs. Lors d'un tel choc, le châssis du véhicule et en particulier ses longerons ne doivent pas être déformés plastiquement. De manière plus générale, le coût des réparations induites par ce choc frontal doit être limité.

Le choc « grande vitesse » est un choc frontal tel que celui qui peut se produire lors d'un accident de la route par percussion d'un autre véhicule automobile. Lors d'un tel choc, le véhicule automobile et en particulier sa poutre de pare-chocs et son châssis doivent absorber une énergie importante en vue de limiter les risques de blessures du conducteur.

On a constaté que la poutre 3 de la figure 1 permet également de satisfaire aux contraintes de ces deux autres chocs.

En particulier, les contraintes du choc dit « réparabilité » peuvent être respectés grâce aux plaques 21 qui viennent fermer le corps 9 au niveau des branches 11. Grâce à ces plaques 21, ces branches 11 sont sensiblement symétriques par rapport à un plan horizontal de sorte qu'elles peuvent absorber par déformation plastique une quantité d'énergie de choc importante permettant d'éviter que les longerons 2 ne se déforment plastiquement.

En outre, la poutre de pare-chocs 3 forme une unité qui peut être manipulée et montée en une seule étape sur le véhicule automobile 1, notamment par vissage de ses platines 4.

De plus, la poutre 4 qui comprend de la matière plastique 8 est relativement légère.

En outre, elle s'avère de coût réduit, notamment par rapport à des poutres de pare-chocs réalisées en composites renforcés par des fibres de verre.

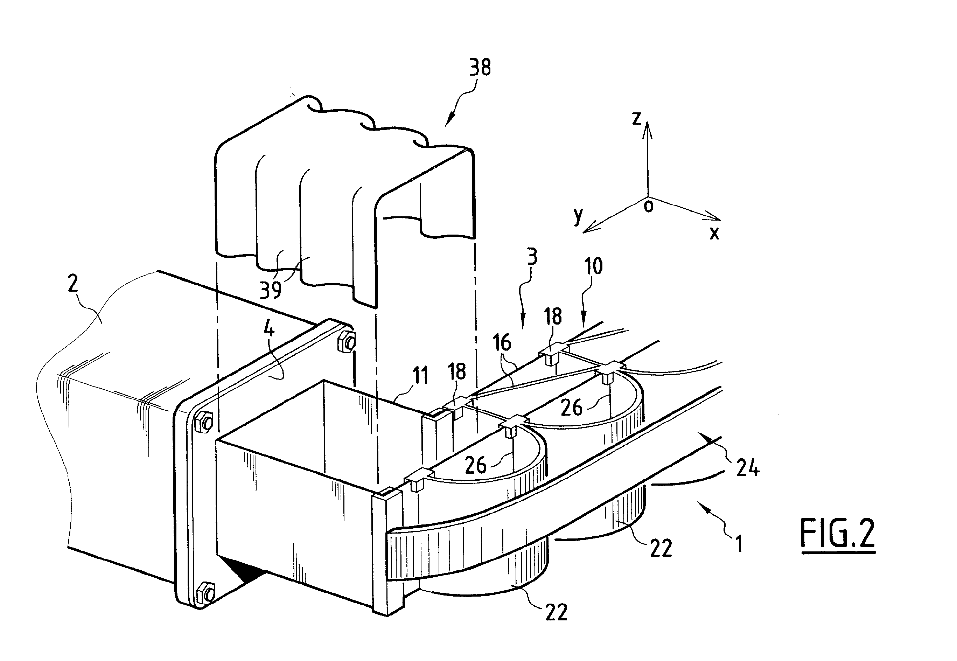

Dans une variante représentée à la figure 2, les branches 11 ne contiennent pas de nervure de matière plastique 16 et la plaque de fermeture 21 est remplacée par un insert 38 de section transversale en U ouvert vers le bas et présentant des ondulations 39 longitudinales.

Chaque insert 38 est disposé dans une branche 11 en la fermant et en lui permettant de remplir son rôle d'absorbeur de chocs lors d'un choc dit « réparabilité » ou d'un choc « grande vitesse ».

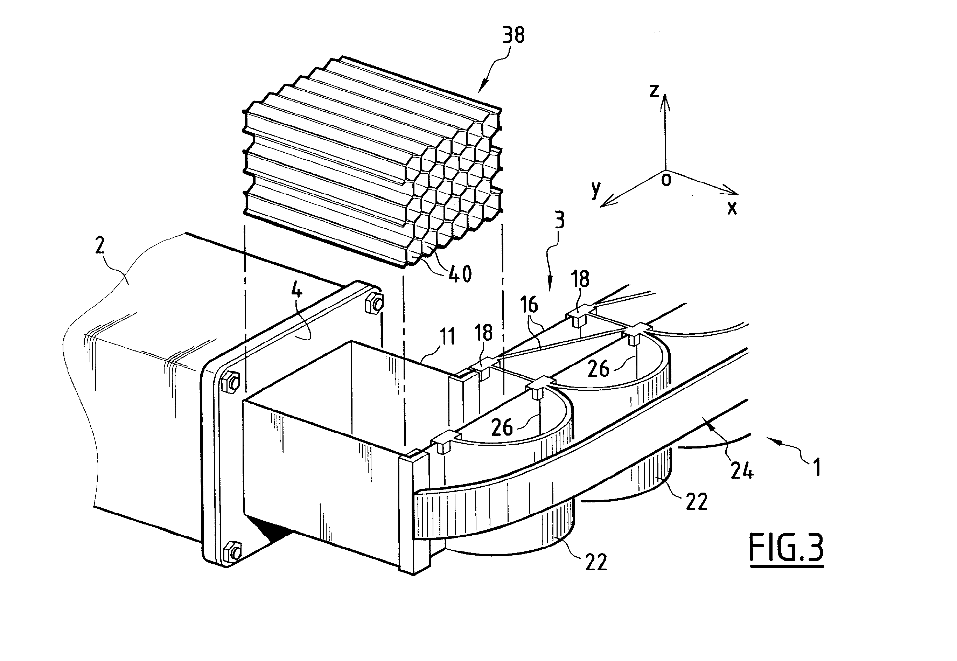

La figure 3 illustre encore une autre variante dans laquelle l'insert 38 est constitué par un bloc à structure alvéolaire, dont les alvéoles 40 sont orientées longitudinalement.

Il peut s'agir comme dans l'exemple représenté d'un bloc en nid d'abeilles, c'est à dire avec des alvéoles 40 de section hexagonale.

Dans encore une autre variante non-représentée, les parois latérales de chaque branche 11 peuvent être formées par la matière plastique 8. Les branches 11 sont alors fermées par des plaques métalliques supérieure et inférieures fixées à la traverse 10. Ces plaques permettent le montage de la poutre 3 sur les longerons 6. Les inserts 38 sont alors insérés dans les branches 11 par l'arrière avant montage sur les longerons 6.

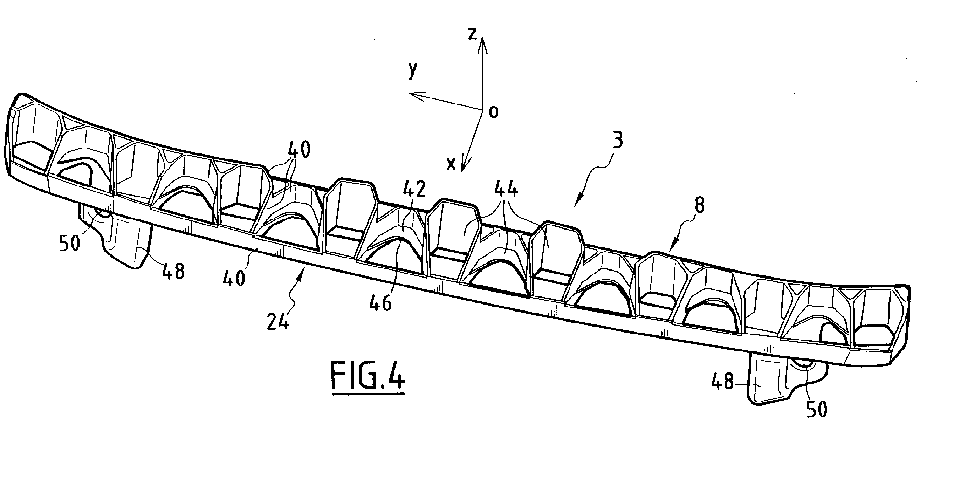

Les figures 4 à 6 illustrent un deuxième mode de réalisation de l'invention dans lequel la poutre 3 est réalisée entièrement en matière plastique 8. La matière plastique 8 comprend des nervures verticales 40 et des nervures horizontales 42 qui délimitent des alvéoles 44 orientées verticalement.

Une nervure 40 avant forme une bande 24 qui, comme dans le cas des figures 1 à 3, s'étend sur toute la largeur de la poutre 3 en bordant par l'avant les alvéoles 44.

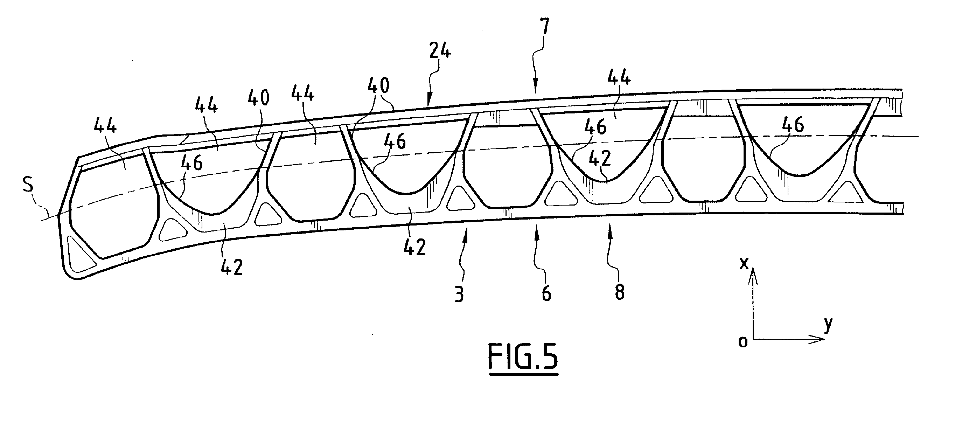

Une alvéole 44 sur deux a sensiblement en vue de dessus, et comme illustré par la figure 5, une forme hexagonale.

Les autres alvéoles 44 ont sensiblement en vue de dessus une forme de secteurs de paraboles de concavités dirigées vers l'avant. En particulier, on notera que dans ces alvéoles 44, les bords avant 46 de nervures horizontales 42 arrière ont des concavités dirigées vers l'avant.

La poutre 3 est prolongée vers le bas au niveau de ses extrémités latérales par des pattes 48 munies chacune d'un orifice 50 de fixation aux longerons du véhicule automobile.

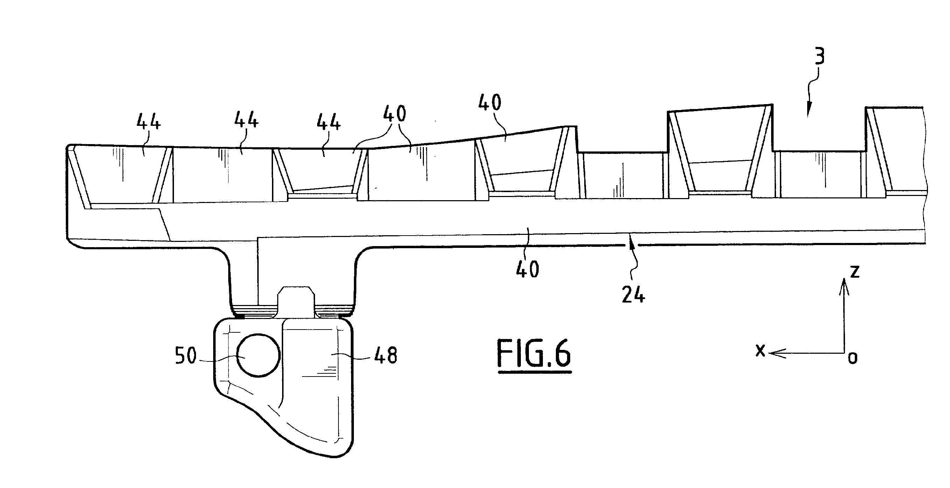

Comme on le voit sur la figure 6, la poutre 3 et notamment les alvéoles 44 de sections sensiblement hexagonales ont une hauteur plus importante dans une région centrale de la poutre 3 qu'aux extrémités latérales de cette dernière. Les autres alvéoles 44 ont une hauteur sensiblement constante sur toute la largeur de la poutre 3.

Comme on le voit sur la figure 5, la poutre 3 comprend dans sa région arrière 6, située en arrière d'une surface géométrique médiane S qui s'étend le long de la ligne directrice de la poutre 3 au travers des alvéoles 44, une densité de nervures 40 et 42 plus importante que dans sa région avant 7 disposée en avant de la même surface S.

La densité de nervures peut, par exemple, être mesurée en calculant le rapport de la masse de la région considérée sur son encombrement extérieur multiplié par la masse volumique de la matière plastique 8. Dans ce cas, la densité de nervures de la région 6 de la poutre 3 est d'environ 54% tandis que cette densité est d'environ 19% dans la région avant 7.

La région arrière 6 qui est plus compacte offre donc une raideur aux chocs plus importante que la région avant 7.

Ainsi, la poutre 3 permet de satisfaire aux exigences du choc dit « piéton » grâce à la région avant 7, et aux exigences du choc dit « parking » grâce à la région arrière 6.

En outre, la poutre 3 permet de limiter les risques de blessures d'un piéton grâce à la bande 24 qui permet de répartir latéralement les efforts résultants d'un choc avec un piéton. En outre, les nervures horizontales 42 permettent, grâce à leurs bords concaves 46, de recevoir la jambe d'un piéton en cas de choc et de limiter les risques de blessures graves de ce dernier.

Les principes des deux modes de réalisation décrits ci-dessus peuvent être combinés entre eux.

## Revendications

1. Poutre de pare-chocs (3) pour véhicule automobile, **caractérisée en ce qu'**elle comprend une région arrière (6) et une région avant (7) qui comprennent des nervures (40, 42) en matière plastique délimitant entre elles des alvéoles, et **en ce que** la région arrière (6) possède une densité de nervures (40, 42) plus importante que la région avant (7) pour présenter une raideur aux chocs plus importante que la région avant.

2. Poutre selon la revendication 1, **caractérisée en ce que** la région arrière comprend des nervures arrière (42) bordant par l'arrière des alvéoles (44), et **en ce que** les bords avant (46) des nervures arrière sont de concavités dirigées vers l'avant.

3. Poutre selon la revendication 1 ou 2, **caractérisée en ce que** la poutre (3) a une hauteur plus importante dans une région centrale que dans des régions d'extrémités latérales.

4. Poutre selon l'une des revendications précédentes, **caractérisée en ce que** la région avant (7) comprend une bande (24) d'extrémité avant qui s'étend latéralement sensiblement sur toute la largeur de la poutre en bordant des alvéoles.

5. Poutre selon l'une des revendications précédentes, **caractérisée en ce que** la région arrière comprend un corps métallique (9), et **en ce que** la matière plastique (8) de la région avant (7) est surmoulée sur le corps métallique (9).

6. Véhicule automobile comprenant une poutre de pare-chocs (3), **caractérisé en ce que** la poutre est une poutre selon l'une quelconque des revendications précédentes.
